# EUROPEAN PATENT SPECIFICATION

(11) **EP 1 481 569 B1**
(45) Date of publication and mention of the grant of the patent: **12.11.2008**
(21) Application number: 03731663.5
(22) Date of filing: 24.01.2003
(51) Int. Cl.: H04R 7/06, H04R 13/00, H04R 19/00

(54) **FLEXIBLE DIAPHRAGM WITH INTEGRATED COIL**
FLEXIBLE MEMBRAN MIT INTEGRIERTER SPULE
MEMBRANE SOUPLE A BOBINE INTEGREE

(30) Priority: 25.01.2002 WO PCT/DK02/00054; 25.01.2002 US 57848; 25.07.2002 US 398117 P
(43) Date of publication of application: 01.12.2004
(73) Proprietor: Sonion Horsens A/S, 8700 Horsens (DK)
(72) Inventor: JOHANNSEN, Leif, DK-8300 Odder (DK); ANDERSEN, Morten, Kjeldsen, DK-8300 Odder (DK)
(74) Representative: Plougmann & Vingtoft A/S
(86) International application number: PCT/DK2003/000045
(87) International publication number: WO 2003/063545

(56) References cited:
- WO-A-02/063922
- US-A- 6 137 891
- US-B1- 6 185 310
- US-B1- 6 278 790

## Description

### FIELD OF THE INVENTION

The present invention relates to the field of electroacoustic transducers. More particularly, the present invention relates to an integrated diaphragm and coil system for use in electroacoustic transducers.

### BACKGROUND OF THE INVENTION

Traditional diaphragm and coil systems for electroacoustic transducers typically comprise an electrically conductive coil formed by a wounded wire - the wire being wound on a bobbin. The bobbin is attached to a diaphragm so as to transform movements or displacements of the bobbin to an acoustical signal. The coil and part of the bobbin is positioned in a magnetic gap so as to form an electromagnetic motor for driving the diaphragm in accordance with an electrical signal applied to the coil.

In some miniature transducers the bobbin is avoided by attaching the coil directly to the diaphragm, thus causing only a part of the coil to be positioned in the magnetic gap. In this way the mass of the bobbin can be avoided. However, a disadvantage is that the part of the coil positioned in the magnetic gap will depend on the actual position of the diaphragm. Thus, an electrical signal applied to the coil will result in an electromagnetic force which will also depend on the position of the diaphragm and thereby result in a non-linear distortion of the produced acoustical signal. Consequently, such transducers are only suited for applications involving very small diaphragm movements where the mentioned non-linear distortion problem may be negligible.

A further disadvantage of transducers with the voice coil directly attached to the diaphragm is that even though the weight of the bobbin is avoided an inactive part of the coil, i.e. the part not positioned in the magnetic gap, adds weight to the diaphragm system without having any electromagnetic effect.

An even further disadvantage is that the absence of a bobbin necessitates a rigidly wounded coil. Normally, the coil is formed by an electrically conductive wire held together by means of lacquer or glue. Not rigidly fixed parts of the wire will result in a not perfect electromagnetic motor, thus causing distortion in the produced acoustical signal.

A yet even further disadvantage with diaphragms having directly mounted coils is that the stiff connection between the coil and the diaphragm is normally formed by an line connection only, namely along the typically circular coil or bobbin periphery. This causes problems with respect to ensuring that the diaphragm moves in a pure piston-like manner. Therefore, normally a quite solid and heavy diaphragm is required in order for the diaphragm to be rigid and stiff enough to perform a pure piston-like movement with only a poor connection to the driving coil. Alternatively, an acceptable stiffness can be obtained by a diaphragm which extends in the movement direction, such as for example a cone shaped diaphragm. This is an acceptable solutions in a number of applications, however for miniature transducers size is a key parameter. Especially the height of the transducer is considered important within for example mobile communication devices such as mobile phones. A diaphragm extending in the direction of its movement will set a limitation to how flat the transducer can be formed. A flat design can be obtained with a flat diaphragm. However, in case of a diaphragm the design is a compromise between a stiff but heavy diaphragm or a light but not stiff diaphragm.

EP 1 182 907 describes transducers with a thin diaphragm having a curved shape and a magnetic circuit having a magnetic gap. The transducers of EP 1 182 702 are characterised in that a thin linear conductor is formed on a surface of the diaphragm. Only the region of the diaphragm where the linear conductor is formed is inserted into the magnetic gap. The transducers described in EP 1 182 907 A2 relate to the field of high frequency audio loudspeakers.

A disadvantage of the diaphragm design of EP 1 182 907 is the curved shape of the diaphragm which is necessary for providing adequate stiffness due to the thin and flexible diaphragm material. However, the curvature of the diaphragm extends in the direction of movements of the diaphragm which requires a substantial height, thus resulting in a design which by nature is not flat. Therefore, the diaphragm design of EP 1 182 907 can not be adopted for use within miniature loudspeakers where a flat design is paramount.

US 4544805 discloses a coil assembly for a transducer with a flexible sheet comprising first and second plane sheet sections arranged perpendicular to each other. A conductive path formed on the first and second sheet sections forms first and second coil sections. The coil structure of US 4544805 only has a single winding. When produced in a miniature scale, this coil will consequently exhibit a very low impedance and is not suited for use with a conventional audio amplifier if high efficiency is required, such as is the case for instance, within miniature portable audio equipment.

It is an object of the present invention to provide a combined diaphragm and coil system suitable for use with miniature - especially flat - electroacoustic transducers. The diaphragm must allow a flat design of the transducer. In addition, the diaphragm and coil system must be suited for low cost mass production.

### SUMMARY OF THE INVENTION

The above-mentioned object is complied with by providing a diaphragm for an electroacoustic transducer, the diaphragm comprising
- a flexible sheet comprising first and second sheet sections, each of the first and second sheet sections defining a substantially plane surface, and
- one or more electrically conductive coils, wherein each of the one or more coils is defined as an electrically conductive path on the substantially plane surfaces of first and second sheet sections so as to form, for each coil, first and second coil sections, respectively.

The second coil section may be adapted to be positioned in a gap of a magnetic circuit. The surfaces of the first and second sheet sections may be arranged substantially perpendicular to each other.

The diaphragm may further comprise electrically conductive portions on the first sheet section, the electrically conductive portions being electrically connected to at least one of the electrically conductive paths defining the one or more coils, and being externally accessible for electrically terminating the electroacoustic transducer.

The diaphragm may further comprise an electronic circuit being electrically connected to at least one of the one or more coils. The electronic circuit may be attached to the substantially plane surface of the first sheet section. The electronic circuit may comprise an impedance converter.

The diaphragm may comprise one coil. The diaphragm may comprise two coils. Each of the two coils may be electrically connected to an impedance converter.

The first sheet section may take a substantially rectangular shape. The first sheet section may take a substantially circular shape. The first sheet section may take a substantially elliptical shape.

The second sheet section may comprise at least one part taking a substantially rectangular shape. The second sheet section may comprise at least one part having a curved shape.

The flexible sheet may comprise a printed circuit board. The printed circuit board may be a single-sided flexprint. By a flexprint is understood a flexible printed circuit board being a laminate comprising at least two layers of material, where at least one of the layers is formed by an electrically conductive material, and where the other layer is an electrically insulating material. The conductive material may be a metal such as copper, aluminium, brass etc. A one-sided flexprint has one layer of electrically conductive material and one layer of electrically insulating material. The printed circuit board may be a double-sided flexprint. By a double-sided flexprint is understood a laminate of a first electrically conductive layer, an electrically insulating layer, and a second electrically conductive layer.

The electrically conductive paths defining the one or more coils may comprise copper. The electrically conductive paths defining the one or more coils may comprise aluminium.

The flexible sheet may be monolithic. The flexible sheet may comprise a main part adapted to radiate acoustical waves, and one or more separate coil parts attached to the main part. The electrically conductive path defining a coil may be defined on each of the one or more coil parts. The one or more electrically conductive paths may define the one or more coils and the externally accessible conductive portions comprise copper. The electrically conductive paths may define the one or more coils comprise aluminium, and wherein the externally accessible conductive portions comprise copper. At least one of the coil parts may be attached to the main part by means of adhesives. The at least one separate coil part may comprise a multi-layer flexprint. By a multi-layer flexprint is understood a laminate of several electrically conductive layers and several electrically insulating layers.

The diaphragm may further comprise means for suspending the diaphragm. The suspending means may form an integral part of the diaphragm. The suspending means may comprise a plurality of suspending means extending along only a part of a circumference of the diaphragm. The plurality of suspending means may extend along substantially the entire part of the circumference of the diaphragm. The suspending means may extend along the entire part of the circumference of the diaphragm.

### BRIEF DESCRIPTION OF THE DRAWINGS

In the following the invention will be explained in further details with reference to the accompanying figures, in which
figure 1 shows a double-sided rectangular flexible diaphragm having one integrated gap part,
figure 2 shows a single-sided rectangular flexible diaphragm having two integrated gap parts,
figure 3 shows a rectangular flexible diaphragm having two integrated gap parts and an ASIC attached to the diaphragm,
figure 4 shows a top and a bottom view of a double-sided rectangular flexible diaphragm having two integrated gap parts,
figure 5 shows a rectangular flexible diaphragm having a coil part defined on a separate sheet, the coil part being a double-sided flexprint,
figure 6 shows an exploded view of a transducer comprising two rectangular flexible diaphragms each having separate coil parts with two gap parts, and
figure 7 shows an elliptically shaped flexible diaphragm having a separate coil part with two gap parts.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

According to the present invention a coil may be formed by a thin and flexible sheet, such as a flexible printed circuit board, i.e. a flexprint. Such thin and flexible sheet will carry a predefined electrically conductive path thereon so as to form a coil-like electrical path. As explained later, the diaphragm will also in its preferred embodiment have electrically conductive portions. Therefore, the coil and diaphragm can be made from a single sheet of flexprint with appropriate conductive paths, and this sheet will be shaped in such a way that the two long sections of the coil will emerge and have an angle of 90 degrees with respect to the rest of the integrated diaphragm/coil structure.

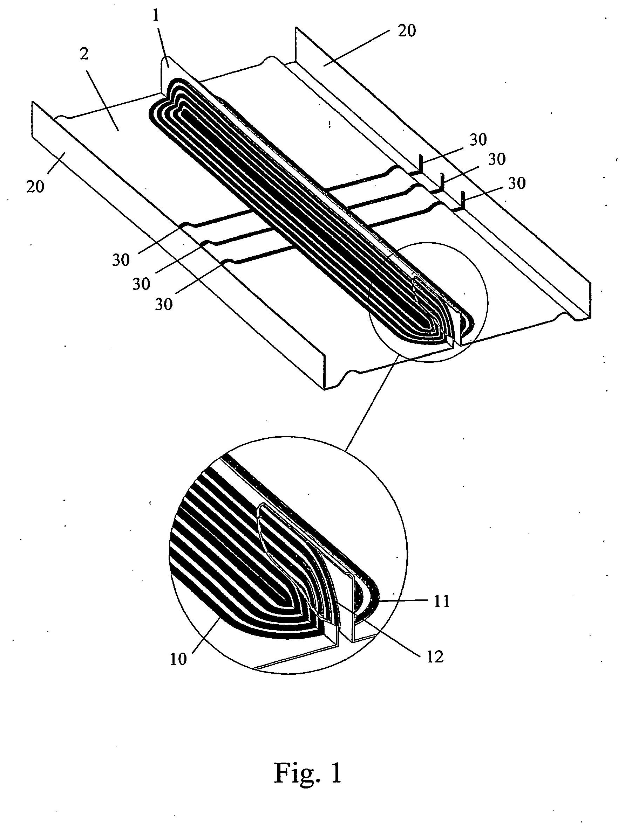

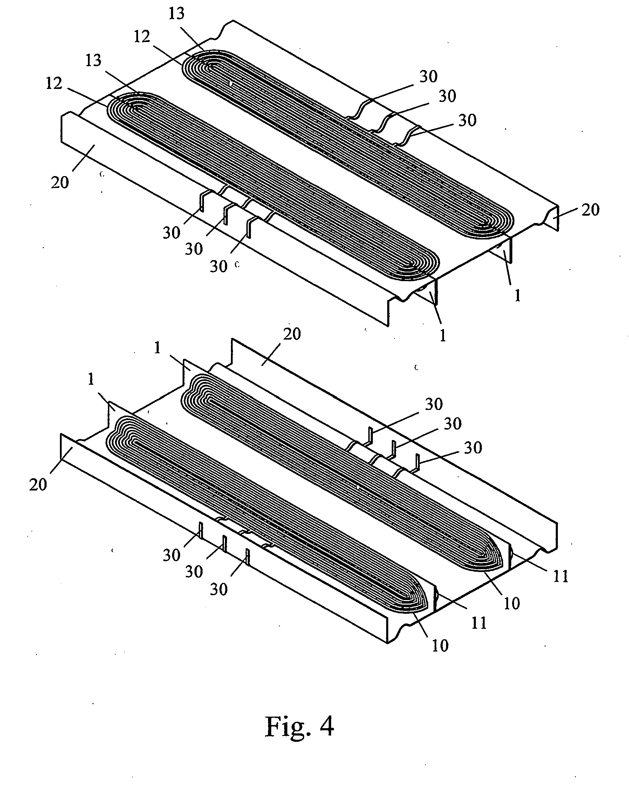

Figure 1 shows a preferred embodiment of the present invention formed by a rectangular double-sided flexprint. Figure 1 shows the diaphragm from a lower side - the side that will face a magnetic circuit when mounted on a transducer. The embodiment shown in figure 1 has one gap part 1 being perpendicular to the main plane 2 of the diaphragm and the diaphragm/coil system is naturally designed for a combination with a magnetic circuit having one magnetic gap. The gap part 1 comprises two separate coils 10,11 on the lower side - one on each side of the bend that forms the gap part 1. Each coil is formed by an electrically conductive path with a helical shape. On figure 1 a first coil 10 is clearly seen whereas a second coil 11 is partly hidden behind the bend. A magnified view in figure 1 shows a cut away revealing a third coil 12 defined on an upper side of the double-sided flexprint. The upper side also comprises a fourth coil that can not be seen in figure 1. Figure 4 shows an upper and a lower view of a double-sided embodiment.

The four coils of the diaphragm shown in figure 1 could be electrically connected either in series or in parallel or in a combination thereof in order to provide a preferred impedance of the transducer. The electrical connection must be performed to ensure that the current direction in all coils is the same thus causing electromagnetic forces on all coils to act in the same direction. Preferably, an electrical connection between two single coils is performed using plated through-holes in the centre of the coils, thus connecting a first coil on one side of the flexible sheet with a second coil on another side of the flexible sheet though the sheet. It should be ensured that the coils are defined so that a current direction in the coils on both sides of the flexible sheet is the same, thus causing electromagnetic forces to act in the same direction if an electrical signal is applied to the coils.

The diaphragm shown in figure 1 has edge portions 20 adapted to fix and attach the diaphragm to not moving parts of a transducer system. The edge portion 20 may also serve for electrical termination of the coils, thus avoiding free wires that may suffer from fatigue due to a high vibration level during motion of the diaphragm. In figure 1 the coils are connected to conducting paths 30 on the flexible sheet, these paths extending to the edge portions 20 thus form a terminal part. External wires may be connected to this terminal part by soldering or using conductive adhesives. In this way external wires soldered to vibrating parts are avoided thus eliminating risk of wires breaking due to fatigue. Hereby, the robustness and thus the reliability of the transducer is significantly improved compared to transducers terminated by free vibrating wires.

The edge portions 20 may comprise one or more tongues adapted for terminating the coils. Tongues may extend from the long sides of the diaphragm with the electrically conductive portions extending to the tongues, so that the electrically conductive portions on the tongues are electrically connected to respective ones of the coil wire ends. The ends of the tongues may be bent 180 degrees so that the end of the conductive portion becomes exposed, or a through-plated hole may establish electrical connection through the tongue. The end portions of the conductive portions of the tongues may thus act as the electrical terminals of the transducer. For some applications, such as mobile phones, it may be interesting to connect the transducer to the electronic equipment by directly soldering the conductive portions of the tongues to conductive portions of a circuit board. Alternative to soldering, a conductive adhesive could be used. Alternatively, the end portions of the conductive portions of the tongues can be soldered or by other means connected to electrical terminals mounted in a housing containing the transducer.

A diaphragm similar to the one shown in figure 1 may be formed using a single-sided flexprint, thus causing the gap part to have one or two coils. The one or two coils may be positioned either on the upper or the lower side of the diaphragm. Only one single coil is necessary for the function of the diaphragm, but an efficiency of a transducer is improved by increasing the amount of conductive material in the magnetic gap.

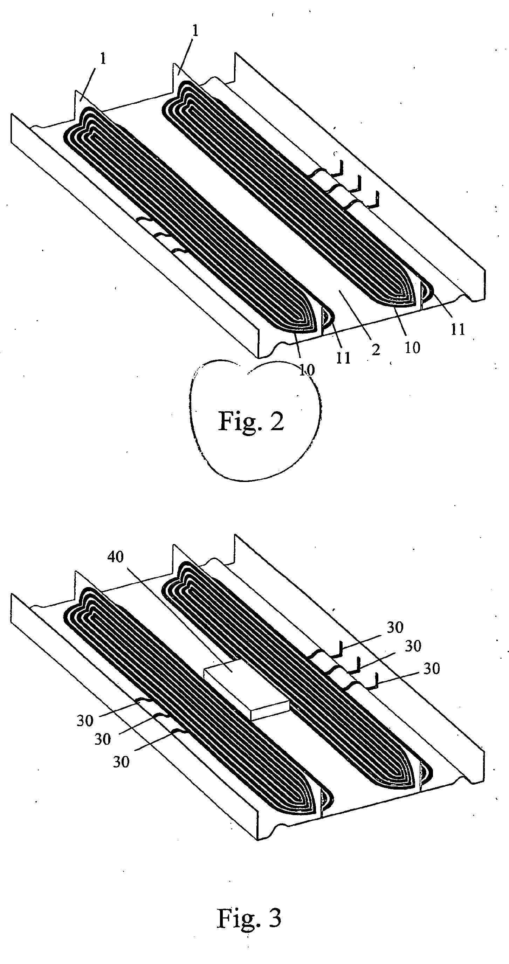

An advantage using two or more coils is the possibility of either electrically connecting the coils in series or parallel. In this way it is possible to obtain different resulting impedances of the transducer such as connecting two 16 Ω coils thus obtaining a resulting impedance of either 32 Ω or 8 Ω. In this way the transducer can be adapted to the amplifier to be used in order to obtain the best match with respect to acoustic output and energy consumption, in case the transducer is used as loudspeaker. Connecting the coils in series or parallel can also be used for control of the acoustic output in case the transducer is used as a loudspeaker. For example the voltage sensitivity of the transducer can be adjusted 6 dB in case of different connection of two coils. The connection of the coils can be determined in the wiring or it can be switchable in a mechanical switch or in an electronically controlled switch. An electronic chip, such as an ASIC 40, comprising this switch function can for instance be positioned on the diaphragm, such as shown in figure 3.

Figure 2 shows an embodiment with a rectangular single-sided flexprint with two gap parts 1 being perpendicular to the main plane of the diaphragm 2, and thus the diaphragm is adapted for use with a transducer comprising two magnetic gaps. Each gap part 1 comprises two separate coils 10,11. Preferably the coils 10,11 are connected so as to ensure that the two gap parts 1 are in phase, e.g. that they tend to move the diaphragm in the same direction when an electrical signal is applied.

Otherwise the diaphragm will tend to tilt instead of perform a piston-like movement, if the diaphragm is used in a loudspeaker transducer.

Figure 3 shows an embodiment similar to the one shown in figure 2 except that the one in figure 3 comprises an electronic circuit implemented as an ASIC 40 attached to a lower side of the diaphragm. The ASIC 40 may also be positioned on an upper side of the diaphragm. Other types of electronic circuits may be attached to the diaphragm, such as single electronic components. However, a circuit implemented in an ASIC 40 has a number of advantages. Preferably, the ASIC 40 is connected to the coils 10,11 via conductors (not shown) on the flexprint forming the diaphragm thus avoiding separate wires for termination of the ASIC 40. In addition, the ASIC 40 may be connected to conductors 30 for terminating the transducer so as to enable the ASIC 40 to receive an external input signal or to provide an external output signal.

In case the transducer is intended for use as a loudspeaker the ASIC 40 may be adapted to receive an external electrical signal and modify the electrical signal before applying it to the coils. The modification may be such as a filtering so as to shape the frequency characteristics of the loudspeaker, i.e. to obtain a flat frequency response. In addition, a filtering may comprise a lowpass filter section for protecting the loudspeaker against large amplitudes at low frequencies. The ASIC 40 may also comprise an impedance converter as further described below. The ASIC 40 may also be adapted to receive a digital signal via conductors terminating the transducer. The digital signal may, in addition to the sound signal intended to be produced, comprise information such as a volume, a specific equalising etc. The ASIC 40 may be adapted to receive this information and modify the produced signal accordingly. In addition, the ASIC 40 may comprise an amplifier or a driver for driving the diaphragm according to the received electrical input signal.

In case the transducer is intended for use as a microphone the ASIC 40 may be adapted to receive an electrical signal from the coils and modify the received electrical signal before providing it via conductors on the diaphragm to an external output terminal. The modification may comprise a preamplifier adapted to amplify and if preferred also impedance convert the electrical signal received from the coils.

The ASIC 40 may be attached to the diaphragm by adhesives or it may be attached solely by soldering its connection terminals to conductive paths on the diaphragm. All electrical connections to the ASIC 40 such as analog signals, digital signals, and power supply signals may be supplied by conductive paths on the diaphragm 30.

Two or more ASICs may be attached to the diaphragm, each of these ASICs comprising electronic means adapted for serving different purposes such as the ones mentioned above. ASICs may be attached to both sides of the diaphragm.

Figure 4 shows an upper and a lower view of a diaphragm formed by a double-sided flexprint, having two gap parts 1. Each gap part 1 holds parts of four separate coils 10,11,12,13. As seen, both sides of the flexprint has conducting paths 30 extending through to an edge portion 20 thus forming a termination of the coils 10,11,12,13. The edge portions 20 extend along the full lengths of the two long sides of the rectangular shaped diaphragm. The two edge portions 20 comprise a curved cross section part serving as suspending means.

With respect to reduce a moving mass of the diaphragm aluminium may be preferred as conductive material. However, aluminium is less suited for the edge portion since it is less resistive against fatigue than for example copper. This problem may be solved with a monolithic two-sided flexprint with copper on one side and aluminium on the other side. For example a lower side of aluminium may be used to form the coils. An upper side of copper is then used for conductors that form a connection between the coils and a termination area. In this way a minimum moving mass is combined with a flexible conductor for termination. Using both sides of the flexprint necessitates an electrical connection through the flexprint between the upper and lower electrical conductor such as a plated through-hole.

Another way to obtain a combination of a low moving mass and a good resistance against fatigue of the termination conductive parts, the diaphragm may be composed of two or more separate sheets. A moving part of the diaphragm may use a light conductive material, such as aluminium, and a part comprising the edge portion of the diaphragm may use a more elastic conductive material, such as copper. In addition, a thickness of the conductive material may be chosen separately.

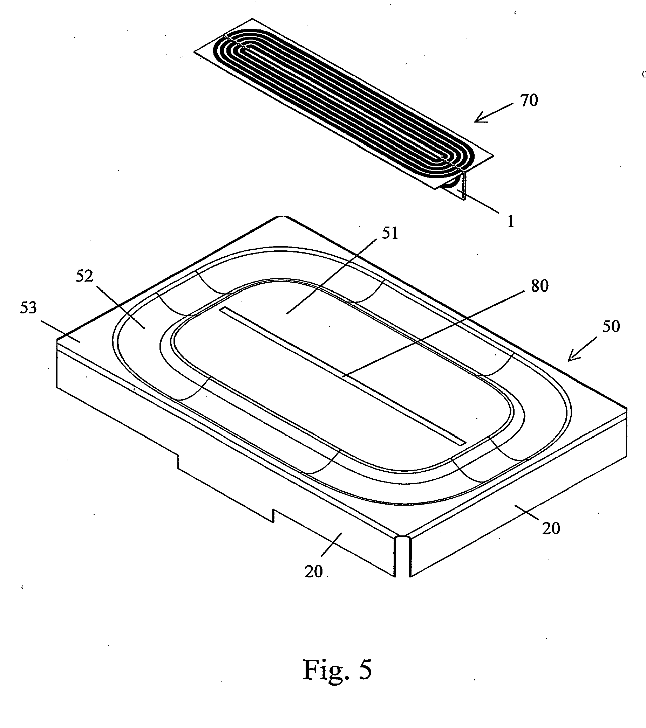

Figure 5 shows an exploded view of a diaphragm with a rectangular outer shape. The diaphragm has a separate main part 50 comprising a substantially rectangular area 51 being adapted to move. In addition, the main part 50 comprises parts forming suspending means 52,53. A coil part 70 is formed on a separate sheet. The coil part 70 is formed by a double-sided flexprint and it is attached to an upper part of the main part 50 so that a gap part 1 of the coil part 70 extends through a hole 80 in the diaphragm. The hole 80 may be formed as a slit thus only an insignificant part of the diaphragm material is removed.

The diaphragm of figure 5 has four flaps 20 (only two can be seen in figure 5), along both the long and the short edges, the flaps 20 being adapted for attachment to a not moving part of a transducer. A suspending part 52 extends along the entire circumference of the diaphragm area 51 adapted to move.

In an alternative embodiment of the one shown in figure 5 with separate main part 50 and coil part 70, one flat sheet may form a diaphragm, and a coil part may 70 be formed by one or more sheets each with at least one coil. The coil part may be bent so as to form gap parts 1 such as shown in figures 5-7. The one or more coil parts 70 is then attached to the diaphragm part 51 so that the gap parts 1 of the coil parts 70 are substantially perpendicular to the diaphragm plane, and that the coil parts 70 have portions in plane with the diaphragm 51 thus allowing attachment to a lower side of the diaphragm 51, for instance by adhesives.

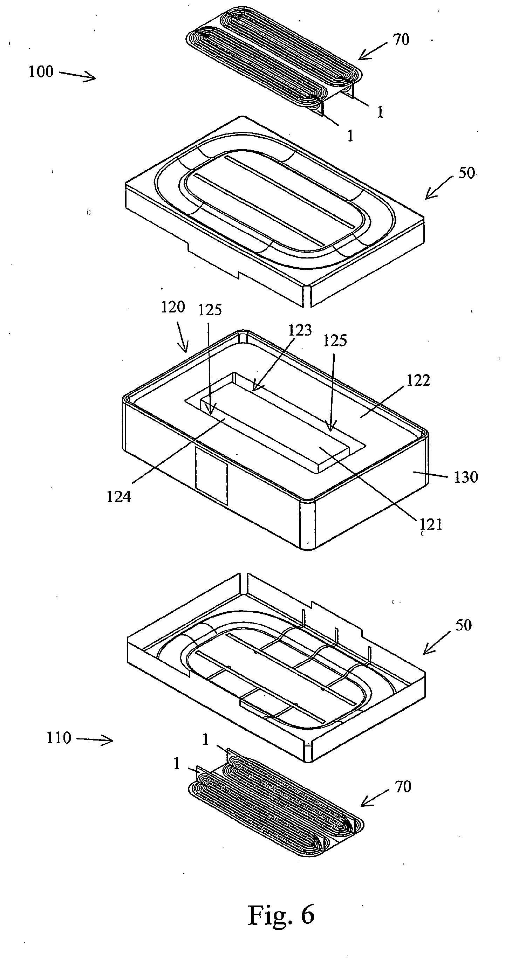

Figure 6 shows an exploded view of a transducer with two diaphragms 100,110. A first diaphragm 100 is positioned on an upper side of a magnetic circuit 120, and a second diaphragm 110, similar to the first diaphragm 100, is positioned on a lower side of the magnetic circuit 120. The two diaphragms 100,110 are almost similar to the type shown in figure 5 since they have separate main parts 50 and coil parts 70 formed by double-sided flexprints. However, whereas each coil part 70 of the diaphragm of figure 5 has one gap part 1, the coil parts 70 shown in figure 6 have two gap parts 1. The magnetic circuit 120 of the transducer is comprised within a housing 130 made of a non-magnetic material, i.e. plastic. The magnetic circuit 120 is fixed within the housing. The shown magnetic circuit 120 comprises one rectangular magnet 121 positioned in the centre of a body of magnetic soft material 122. Each of the long sides of the magnet 121 forms its magnetic poles 123,124. The body of magnetic soft material 122 forms an annular member, here shown as a rectangular member formed by two rectangular short legs and two rectangular long legs. Two magnetic gaps 125 are formed by the magnetic circuit 120. Each magnetic gap 125 is formed by two plane surfaces, one of the plane surfaces being formed by the magnet 121 and one formed by the body of magnetic soft material 122.

The diaphragm may be fixed to the housing 130, such as along the edges of the housing or to the sides of the housing. The diaphragm may alternatively be fixed to parts of the magnetic circuit 120, such as the annular member 122. The gap parts 1 of the coils of each of the diaphragms 100,110 may be positioned in the magnetic gaps 125 so that they spatially overlap in the magnetic gaps 125. They may also be positioned so that they do not spatially overlap in the magnetic gaps 125. The magnetic circuit 120 has a through going opening between the magnet 121 and the annular member 122. Depending on the application of the transducer it may be preferred to seal the through going opening so that the two diaphragms 100,110 are not acoustically connected. It may also be preferred that that are connected via the through going opening in the magnetic circuit, either by not blocking the opening or by partly blocking the opening.

A double diaphragm transducer such as shown in figure 6 may be used as a loudspeaker unit. Either a common electrical signal may be applied to the two diaphragm and coil systems so at to form a loudspeaker with spherical sound dispersion. The double diaphragm transducer may also be used to produce stereophonic sound signals by applying a first electrical signal according to a first stereophonic channel to the first diaphragm while applying a second electrical signal according to a second stereophonic channel to the second diaphragm.

The double diaphragm transducer may be electrically connected so an electrical input signal is applied to the coil systems of the two diaphragms so the diaphragms will move in the same direction. In this way the transducer will form a substantially silent vibration generator which may be used in mobile phones as signaller. At the same time the transducer may function as loudspeaker and generate an acoustic signal if another electrical signal is applied to the two coil systems with a phase so that the two diaphragms move in opposite directions.

The double diaphragm transducer may also be used as a microphone. An electrical signal may be combined from the two diaphragm and coils systems so as to form a microphone with a generally spherical sensitivity pattern. An electrical signal may also be combined from the two diaphragm and coil systems so as to form a microphone with a figure-of-eight sensitivity pattern. The transducer may also serve as stereophonic microphone.

The double diaphragm transducer may also be used both as a microphone and a loudspeaker. Alternatively, one diaphragm may be used as microphone while the other diaphragm is used as loudspeaker. Alternatively, both diaphragms may be used as loudspeaker at one time while used as microphone at another time in another mode of operation.

The microphone and loudspeaker modes of operation may also be combined with the vibrator mode of operation. This may be advantageous for example within mobile telecommunication equipment. Here the two diaphragm transducers may serve as vibration signaller, stereo loudspeaker and stereo microphone depending on the mode of operation thus saving space and weight for separate transducers for the three functions.

In a preferred embodiment with a rectangular diaphragm; such as the embodiments shown in figures 1-6, the diaphragm is supported and thereby driven in its entire length by the gap portions of the coil. Therefore, the diaphragm can at the same time be formed thin and be stiff. Thereby, the diaphragm will be light and it will follow the movements of the coil portion with a pure piston-like movement up to a high frequency.

An important feature of a flexprint is that it is possible to integrate the coil system and diaphragm. This shows a number of advantages compared to the known diaphragm and coil systems. For example it is possible to position the electromagnetically active part of the conductive paths of the coil so that it is always positioned in the magnetic gap - also in case of quite substantial diaphragm movements. Therefore, an active part of the coil will be in the magnetic gap independent of the position of the diaphragm thus ensuring a linear transformation of an electrical input signal to an acoustical signal. Hereby, a non-linear distortion contribution by traditional transducers with the coil attached directly to the diaphragm is eliminated.

Since the coil and diaphragm are by nature integrated the best possible rigid mechanical connection between the coil and diaphragm is obtained. All means of attachment that could possibly introduce a flexible connection such as glue etc. is eliminated. According to the invention it is possible to use several shapes of the coil which allows patterns giving a large degree of support of the flat part of the diaphragm by the perpendicularly mounted coil parts. This gives a diaphragm/coil structure which is very rigid in the direction of movement.

The diaphragms according to the present invention have excellent properties with respect to miniature transducers such as used in mobile telecommunication equipment. However, the design also has advantageous properties for example for application within long and slim transducer elements. Long and slim transducer elements can be produced with a very stiff diaphragm with an excellent coupling to the coil system compared to traditional transducers. Hereby, the total length of even a long diaphragm will move in phase also at high frequencies. This enables applications such as hi-fi loudspeaker systems for example as high frequency drivers which are highly directive. Highly directive loudspeakers are advantageous in a number of applications since this is a way to minimise a negative influence from the acoustics of the room in which the loudspeaker is positioned.

An important parameter regarding the gap portion of the coil is the portion of the gap filled with conducting material contributing to the electromagnetic motor. In order to increase the filling portion of coil material in the magnetic gap, the coil paths can be made quite wide. This will increase the sensitivity of the transducer traded for a low impedance of the transducer. In case the impedance is too low to operate with traditional electronic amplifier equipment used for instance within mobile phones, an impedance converter contained in a chip, such as an ASIC, 40 can be mounted on the diaphragm. An embodiment with the chip in form of an ASIC 40 mounted on the coil side of the diaphragm is shown in figure 3.

A large filling portion is important with respect to effectively utilise the space available in the magnetic gap. In case of a one-sided flexprint with a single conductive layer the filling portion is largely influenced by the techniques used to form the coils, e.g. the techniques used to remove conductive material. The best efficiency is obtained if conductive material can be removed in very thin paths thus leaving conductors with substantially rectangular cross section. Conductive material may for instance be removed using an etching technique. Conductive material may also be removed using a laser technique.

With a given technique to remove conductive material for forming the coil a given minimum space between the single conductive paths of the coil can be obtained. In order to optimise the filling portion the number of spaces must be reduced. Therefore, an optimum filling portion is obtained with a coil with only one single winding. However, a low number of windings will produce a coil with a very low electrical impedance. In case the diaphragm is used in a transducer which is used as a loudspeaker the impedance may be too low for the loudspeaker driver or amplifier intended to drive the loudspeaker. This may be solved by connecting an electrical impedance converter between the amplifier and the loudspeaker coil. By using a multi layer flexprint it is possible to form a very compact coil system by use of only one or at least only few windings per layer and still obtain an acceptable electrical impedance.

The embodiments shown in figures 1-4 are all bent so as to form edge portions along the two long sides of the diaphragm. The edge portions comprise portions adapted for attachment to a housing such as the one shown in figure 6, for example by means of adhesives. The edge portions may also be attached to other not moving part of the transducer. The edge portions also comprise portions adapted to provide a flexible suspension allowing the diaphragm to move perpendicular to its main plane. Thus the edge portions serve to fix the diaphragm in a position of equilibrium so as to ensure that the gap portions of the coils are positioned properly in the magnetic gaps in a vertical direction so as not to touch the sides of the gaps, which would cause distortion. In addition, the edge portions also determine the horizontal point of equilibrium of the diaphragm around which the diaphragm will move when an electrical signal is applied to the coils.

The resilient properties of the edge portion, hereby the possible stroke of the diaphragm, is influenced by the flexprint material, the chosen dimensions of the edge suspension portion and the shape into which the flexprint is bent. In figures 1-4 the suspension part of the edge portion is bent to form a curved or rounded cross section which is preferable with respect to the resilient properties of the suspending means. The suspending means may also be formed to have a triangular cross section, or it may comprise more bends thus forming an accordion like suspension part of the edge portion and thereby a softer suspension allowing a larger stroke of the diaphragm.

In figures 1-4 the shown embodiments have edge portions along the long sides of the diaphragm. If preferred, the long edges of the diaphragm may be fastened to the magnetic system of the transducer or to the casing by means of an adhesive. It may be preferred that the short sides of the diaphragm are free, whereby a narrow slot is provided giving access of air between the two sides of the diaphragm. The slot can be tuned to have desired acoustic properties influencing the acoustic performance of the transducer, in particular at low frequencies. The edge configuration may significantly influence the natural frequency of the moving system thus forming an important design parameter of a transducer.

If preferred, the short edges of the diaphragm of figures 1-4 may also be fastened to the magnetic system or to the casing, such as shown in figures 5-7 or, alternatively, the slot can be closed with a flexible substance so as to allow the short edges to move. However, the flexible substance prevents air from going from one side of the diaphragm to the other. It may also be preferred to fasten the diaphragm using edge portions extending from the short sides only.

The acoustic output from the transducer depends on the chosen edge configuration. The best sensitivity is obtained with air-tight edges, however the low frequency output may benefit from a tuned gap. In addition, it may be advantageous to omit edge portions on the short edges, for example in a configuration where several similar transducers are used to form a line element.

In case the diaphragm system is used in a transducer system with a housing, such as for example shown in figure 6, the edge portion will form one of the factors determining the acoustical performance of the transducer with respect to natural frequency of the moving system. Figures 1-4 show preferred embodiments with the entire lengths of the long sides of the diaphragm to be attached to the housing. Additional edge portions on the short sides of the diaphragms can be attached or such portions may be bent from the flexprint sheet in the same manner as shown for the long sides of the diaphragm, such as shown in figures 5-7. By applying additional elastic material it is possible to seal the entire edge of the diaphragm, if preferred from an acoustical point of view. On the contrary it is also possible to use only a minor part of for instance two opposite sides of the diaphragm to fix the diaphragm thus leaving a significant acoustical opening along the edge of the diaphragm.

According to the present invention an embodiment may be formed by a single rectangular flexprint bent so as to form one gap portion, the gap portions being perpendicular to a major plan of the diaphragm. In this way the gap portion of the coil supports the diaphragm in its entire length, and it is possible to produce the integrated diaphragm/coil system using one single component. If a very stiff diaphragm is necessary the flexprint may be bent so as to form a double diaphragm. The two layers may be attached to each other by an adhesive. Alternatively, a stiffer diaphragm may be obtained by applying a second sheet of material on top of the flexprint diaphragm so as to form a double layer diaphragm.

Since the diaphragm/coil system can be formed monolithically, for example using one piece of flexprint, the number of single elements is reduced compared to traditional diaphragm/coils systems. Hereby, possible production errors due to mismatches by attachment of the coil to the diaphragm is eliminated. Therefore, transducers according to the present invention are attractive regarding low cost mass production. In addition, a single sheet implementation provides a minimum of possible poor connections and a minimum of possible broken connectors, thus increasing the reliability of the transducer. A large degree of reliability concerning termination of the transducer can be obtained using a flexprint where the conductive paths are formed by copper. This is due to the fact that copper has mechanical properties allowing small bends of the conductive portions connecting the diaphragm part and the fixed portion of the edge that occurs during motion of the diaphragm.

For the embodiments with the diaphragm formed by two or more separate sheets the sheet material may still be a flexprint. This allows the diaphragm to have integrated conductors for electrical connections to the coil parts either by means of soldering or by means of conductive adhesives. Integrated conductors on the diaphragm may also be advantageous with respect to attachment and connection of electronic devices, such as ASICs, to the diaphragm. Apart from the mentioned advantage of choosing independent conductive materials for different parts of the diaphragm embodiments using two or more flexprints also allows for selection of independent sheet types with respect to sheet material and sheet thickness. It is possible, for example, to use a thicker and thereby stiffer sheet material for the gap parts than for the diaphragm part thus providing a stable coil part. In case of the diaphragm to be used in a loudspeaker the materials may be chosen so that the diaphragm material is thicker and thereby stiffer than the gap part thus providing a stiff diaphragm.

A simple embodiment of the diaphragm is rectangular in shape, such as the ones shown in figures 1-6. This includes possibilities of a long and narrow diaphragm or a substantially quadratic diaphragm. A large variety of alternative diaphragm shapes may be chosen. This allows the diaphragm to be shaped so as to give the best possible utilisation of a space available for a transducer to be used in applications with very narrow dimensions. In this way it is possible for a transducer to have a large diaphragm area compared to the space available for the transducer in a certain application. The diaphragm may have other shapes than rectangular such as circular, elliptical or any other shape that may be suitable for special applications.

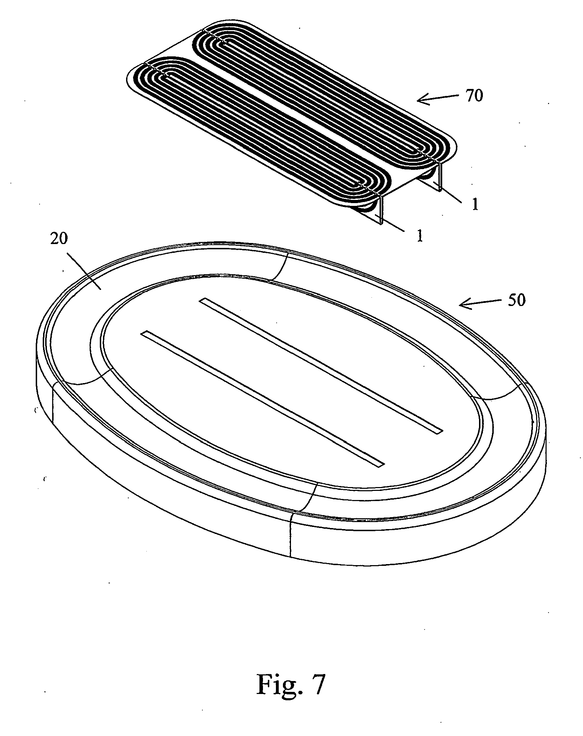

Figure 7 shows an example of an elliptical diaphragm having a separate main part 50 and coil part 70. The diaphragm of figure 7 has an edge portion 20 extending along an entire circumference of the diaphragm. The coil part 70 is double-sided and has two gap parts 1.

The shape of the gap parts 1 of the coils shown in figures 1-7 are rectangular. These parts 1 may be chosen to have other shapes such as part of a circle or part of an ellipse or any other shape by choice. In figure 1-7 the gap parts 1 are shown to be substantially flat and in case of more than one gap part 1 the gap parts 1 are shown to be parallel. This shape allows a monolithic implementation. However, in case the gap parts 1 are formed on separate sheet parts 70 they may have other shapes than flat parts. The gap part 1 may be curved and in case of more than one gap part 1 the gap parts 1 may form different curved shapes. More than one gap part 1 may be formed by flat parts not being parallel, they may for instance intersect under the diaphragm. The different configurations may be freely chosen so as to allow the diaphragm to be adapted for application within a large variety of magnetic circuit configurations. Configurations may also be chosen so as to ensure a large degree of support of the diaphragm thus providing a stiff diaphragm even though it is flat and formed by a thin a light material.

## Claims

1. An integral diaphragm and coil assembly for an electroacoustic transducer, comprising
- a flexible sheet comprising first (2) and second (1) sheet sections arranged substantially perpendicular to each other, each of the first (2) and second (1) sheet sections defining a substantially plane surface, and
- an electrically conductive path (10) formed on the substantially plane surfaces of the first (2) and second (1) sheet sections so as to form first and second coil sections,
wherein the first and second coil sections comprises first and second pluralities of windings, respectively.

2. An integral diaphragm and coil assembly according to claim 1, exhibiting an impedance of 8 Ω, or 32 Ω.

3. An integral diaphragm and coil assembly according to any of the preceding claims, wherein the second (1) sheet section comprises separate first and second coil parts (10, 11, 12) arranged substantially parallel to each other.

4. An integral diaphragm and coil assembly according to any of claims 1 or 2, further comprising a plurality of electrically conductive coils (10, 11,12) forming a plurality of respective electrically conductive paths on the substantially plane surfaces of first (2) and second (1) sheet sections.

5. An integral diaphragm and coil assembly according to any of the preceding claims, further comprising electrically conductive portions (30) on the first (2) sheet section, the electrically conductive portions (30) being electrically connected to the electrically conductive path (10), and being externally accessible for electrically terminating the assembly.

6. An integral diaphragm and coil assembly according to any of the preceding claims, further comprising an electronic circuit (40) being electrically connected to the electrically conductive path (10), the electronic circuit (40) being attached to the substantially plane surface of the first (2) sheet section.

7. An integral diaphragm and coil assembly according to any of the preceding claims, wherein the first (2) sheet section takes a shape selected from the group consisting of: substantially rectangular, substantially circular, and substantially elliptical.

8. An integral diaphragm and coil assembly according to any of the preceding claims, wherein the second (1) sheet section comprises at least one part taking a substantially rectangular shape.

9. An integral diaphragm and coil assembly according to any of the preceding claims 1, wherein the second (1) sheet section comprises at least one part having a curved shape.

10. An integral diaphragm and coil assembly according to any of the preceding claims, wherein the flexible sheet comprises a part selected from the group consisting of: single-sided flexprint, double-sided flexprint, and multi-layer flexprint.

11. An integral diaphragm and coil assembly according to any of the preceding claims, wherein the electrically conductive path (10) comprises an aluminium trace.

12. An integral diaphragm and coil assembly according to any of the preceding claims, further comprising means (20) for suspending the diaphragm, wherein the suspending means (20) forms an integral part of the diaphragm and coil assembly.

## Patentansprüche

1. Integrale Membran- und Spulen baueinheit für einen elektroakustischen Wandler, umfassend
- eine flexible Folie, umfassend einen ersten (2) und zweiten (1) Folienabschnitt, welche im Wesentlichen senkrecht zueinander angeordnet sind, wobei jeder des ersten (2) und zweiten (1) Folienabschnitts eine im Wesentlichen ebene Fläche definiert, und
- eine elektrisch leitende Bahn (10), die auf den im Wesentlichen ebenen Flächen des ersten (2) und zweiten (1) Folienabschnitts unter Ausbildung eines ersten und zweiten Spulenabschnitts ausgebildet ist,
wobei der erste und zweite Spulenabschnitt eine erste bzw. zweite Vielzahl von Windungen umfasst.

2. Integrale Membran- und Spulenbaueinheit nach Anspruch 1, die eine Impedanz von 8 Ω oder 32 Ω zeigt.

3. Integrale Membran- und Spulenbaueinheit nach einem der vorhergehenden Ansprüche, wobei der zweite (1) Folienabschnitt getrennt ein erstes und zweites Spulenteil (10, 11, 12) umfasst, die im Wesentlichen parallel zueinander angeordnet sind.

4. Integrale Membran- und Spulenbaueinheit nach einem der Ansprüche 1 oder 2, weiterhin umfassend eine Vielzahl elektrisch leitfähiger Spulen (10, 11, 12), die auf den im Wesentlichen ebenen Fläche des ersten (2) und zweiten (1) Folienabschnitts eine Vielzahl von jeweils elektrisch leitenden Bahnen ausbilden.

5. Integrale Membran- und Spulenbaueinheit nach einem der vorhergehenden Ansprüche, weiterhin umfassend elektrisch leitfähige Bereiche (30) auf dem ersten (2) Folienabschnitt, wobei die elektrisch leitfähigen Bereiche (30) elektrisch mit der elektrisch leitenden Bahn (10) verbunden sind und zum elektrischen Abschalten der Baueinheit von außen zugänglich sind.

6. Integrale Membran- und Spulenbaueinheit nach einem der vorhergehenden Ansprüche, weiterhin umfassend einen elektronischen Schaltkreis (40), der elektrisch mit der elektrisch leitenden Bahn (10) verbunden ist, wobei der elektronische Schaltkreis (40) an der im Wesentlichen ebenen Fläche des ersten (2) Folienabschnitts angebracht ist.

7. Integrale Membran- und Spulenbaueinheit nach einem der vorhergehenden Ansprüche, wobei der erste (2) Folienabschnitt eine Form annimmt, die aus der Gruppe bestehend aus: im Wesentlichen rechteckig, im Wesentlichen rund und im Wesentlichen elliptisch ausgewählt ist.

8. Integrale Membran- und Spulenbaueinheit nach einem der vorhergehenden Ansprüche, wobei der zweite (1) Folienabschnitt mindestens einen Teil umfasst, der eine im Wesentlichen rechteckige Form annimmt.

9. Integrale Membran- und Spulenbaueinheit nach einem der vorhergehenden Ansprüche, wobei der zweite (1) Folienabschnitt mindestens einen Teil umfasst, der eine im Wesentlichen gekrümmte Form aufweist.

10. Integrale Membran- und Spulenbaueinheit nach einem der vorhergehenden Ansprüche, wobei die flexible Folie einen Teil umfasst, der aus der Gruppe bestehend aus: einseitigem Flexdruck, doppelseitigem Flexdruck und mehrlagigem Flexdruck ausgewählt ist.

11. Integrale Membran- und Spulenbaueinheit nach einem der vorhergehenden Ansprüche, wobei die elektrisch leitende Bahn (10) eine Aluminiumspur umfasst.

12. Integrale Membran- und Spulenbaueinheit nach einem der vorhergehenden Ansprüche, weiterhin umfassend Mittel (20) zur Aufhängung der Membran, wobei das Aufhängungsmittel (20) integral mit der Membran- und Spulenbaueinheit ausgebildet ist.

## Revendications

1. Ensemble de membrane et de bobines intégré pour transducteur électroacoustique, comprenant
- une feuille souple comprenant des première (2) et seconde (1) sections de feuille agencées sensiblement perpendiculairement l'une à l'autre, chacune des première (2) et seconde (1) sections de feuille définissant une surface sensiblement plane, et
- un chemin conducteur de l'électricité (10) formé sur les surfaces sensiblement planes des première (2) et seconde (1) sections de feuille afin de former des première et seconde sections de bobine,
dans lequel les première et seconde sections de bobine comprennent des première et seconde pluralités d'enroulements, respectivement.

2. Ensemble de membrane et de bobines intégré selon la revendication 1, présentant une impédance de 8 Ω, ou de 32 Ω.

3. Ensemble de membrane et de bobines intégré selon l'une quelconque des revendications précédentes, dans lequel la seconde (1) section de feuille comprend des première et seconde parties de bobine séparées (10, 11, 12) agencées sensiblement parallèlement l'une à l'autre.

4. Ensemble de membrane et de bobines intégré selon l'une quelconque des revendications 1 ou 2, comprenant en outre une pluralité de bobines conductrices de l'électricité (10, 11,12) formant une pluralité de chemins conducteurs de l'électricité respectifs sur les surfaces sensiblement planes des première (2) et seconde (1) sections de feuilles.

5. Ensemble de membrane et de bobines intégré selon l'une quelconque des revendications précédentes, comprenant en outre des parties conductrices de l'électricité (30) sur la première (2) section de feuille, les parties conductrices de l'électricité (30) étant reliées électriquement au chemin conducteur de l'électricité (10), et étant accessibles de l'extérieur pour permettre le raccordement électrique de l'ensemble.

6. Ensemble de membrane et de bobines intégré selon l'une quelconque des revendications précédentes, comprenant en outre un circuit électronique (40) qui est relié électriquement au chemin conducteur de l'électricité (10), le circuit électronique (40) étant attaché à la surface sensiblement plane de la première (2) section de feuille.

7. Ensemble de membrane et de bobines intégré selon l'une quelconque des revendications précédentes, dans lequel la première (2) section de feuille prend une forme choisie dans le groupe composé de : sensiblement rectangulaire, sensiblement circulaire et sensiblement elliptique.

8. Ensemble de membrane et de bobines intégré selon l'une quelconque des revendications précédentes, dans lequel la seconde (1) section de feuille comprend au moins une partie prenant une forme sensiblement rectangulaire.

9. Ensemble de membrane et de bobines intégré selon l'une quelconque des revendications précédentes, dans lequel la seconde (1) section de feuille comprend au moins une partie ayant une forme courbée.

10. Ensemble de membrane et de bobines intégré selon l'une quelconque des revendications précédentes, dans lequel la feuille souple comprend une partie choisie dans le groupe composé de : circuit imprimé souple simple face, circuit imprimé souple double face, et circuit imprimé souple multi-couche.

11. Ensemble de membrane et de bobines intégré selon l'une quelconque des revendications précédentes, dans lequel le chemin conducteur de l'électricité (10) comprend un ruban d'aluminium.

12. Ensemble de membrane et de bobines intégré selon l'une quelconque des revendications précédentes, comprenant en outre un moyen (20) pour suspendre la membrane, dans lequel le moyen de suspension (20) fait partie intégrante de l'ensemble de membrane et de bobines.
